# EUROPEAN PATENT SPECIFICATION

(11) **EP 2 923 870 B1**
(45) Date of publication and mention of the grant of the patent: **05.07.2017**
(21) Application number: 13857157.5
(22) Date of filing: 19.11.2013
(51) Int. Cl.: B60J 5/00, B60J 5/10, B60J 5/04

(54) **REINFORCING STRUCTURE OF VEHICLE DOOR**
VERSTÄRKUNGSSTRUKTUR FÜR EINE FAHRZEUGTÜR
STRUCTURE DE RENFORT POUR PORTE DE VÉHICULE

(30) Priority: 21.11.2012 JP 2012255204
(43) Date of publication of application: 30.09.2015
(73) Proprietor: Kabushiki Kaisha Toyota Jidoshokki, Kariya-shi, Aichi 448-8671 (JP); TOYOTA JIDOSHA KABUSHIKI KAISHA, Toyota-shi, Aichi-ken, 471-8571 (JP)
(72) Inventor: KATO Nobukazu, Kariya-shi Aichi 448-8671 (JP); HATTA Yasuhiro, Kariya-shi Aichi 448-8671 (JP); ARIMA Hirofumi, Kariya-shi Aichi 448-8671 (JP); CHIBA Kenji, Toyota-shi Aichi 471-8571 (JP)
(74) Representative: TBK
(86) International application number: PCT/JP2013/081154
(87) International publication number: WO 2014/080901

(56) References cited:
- JP-A- H07 329 577
- JP-A- H07 329 577
- JP-A- 2009 126 359
- JP-A- 2011 148 463
- JP-A- 2011 148 464
- JP-U- H0 740 225
- US-A- 3 907 358
- US-A1- 2006 158 007

## Description

### Technical Field

The present invention relates to a reinforcing structure of a vehicle door according to the preamble of claim 1. The vehicle door opens and closes a door opening portion in a vehicle, such as an automobile.

### Background Art

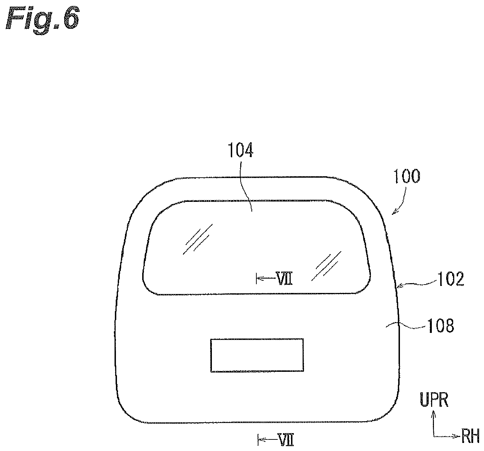

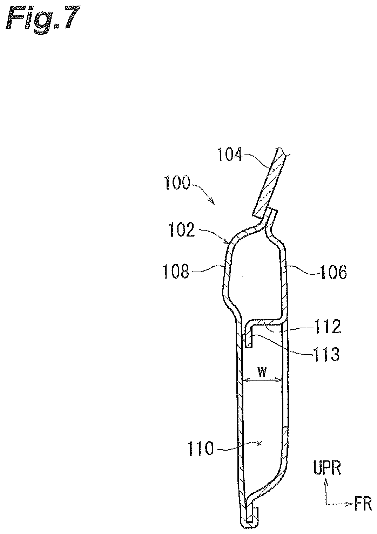

A back door that opens and closes a door opening portion provided in a rear end portion of a vehicle body in a vehicle such as an automobile including, for example, a hatchback vehicle or a station wagon will be exemplarily described as a known vehicle door. Fig. 6 is a rear elevation illustrating a back door. Fig. 7 is a cross-sectional view taken along line VII-VII of Fig. 6. As illustrated in Fig. 6, a back door 100 includes a back door main unit 102 that serves as a main unit of the back door 100 and a window glass 104 provided in an upper portion of the back door main unit 102. As illustrated in Fig. 7, the back door main unit 102 includes an inner panel 106 and an outer panel 108. The inner panel 106 and the outer panel 108 are joined to each other so as to form an internal space 110 therebetween. Additionally, to enhance the rigidity of the back door 100, the inner panel 106 includes a cut-and-raised portion 112 formed therein. The cut-and-raised portion 112 has a leading end portion 113 joined to the outer panel 108 by mastic bonding.

Closest prior art document JP H07 40225 U discloses a generic reinforcing structure having the features of the preamble of claim 1 that reinforces a back door by having a bead portion formed on an inner panel joined to an outer panel and connecting the inner panel to the outer panel by a reinforcement. JP 2011 148464 A discloses a reinforcing structure that joins an inner panel to an outer panel and includes a reinforcing member disposed on the inner panel, the reinforcing member reinforcing a mounting portion of a latch. JP 2008 248581 A discloses a door opening/closing control unit. The door opening/closing control unit includes a control part (control circuit) for controlling the opening and closing of a back door disposed in an operating unit (door handle) that is operated to open and close the back door.

### Summary of Invention

### Technical Problem

The known vehicle door described earlier does not consider housing parts, such as an automatic door opening/closing control unit (ECU) and a vibration damping mass damper, in the back door 100. In addition, in the cut-and-raised portion 112 (see Fig. 7), a length of an arm portion (referred to as an "arm length") extending across the inner panel 106 and the outer panel 108 corresponds to a long distance w in a vehicle longitudinal direction between the inner panel 106 and the outer panel 108. This results in reduced reinforcing effects by the cut-and-raised portion 112.

JP H07 40225 U and JP 2011 148464 A do not consider housing a part in the back door. JP 2008 248581 A does not consider housing a control part in the inner panel, although the control part is housed in the operating unit (door handle) for the back door.

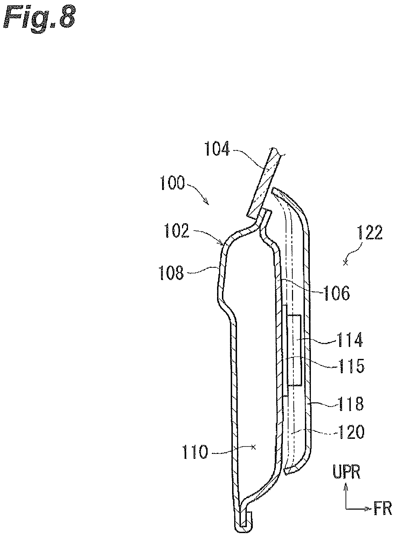

To mount a part on the inner panel of the back door in the known vehicle door described earlier, the following part mounting example may be possible. Fig. 8 is a cross-sectional view illustrating a part mounting example. As illustrated in Fig. 8, a part 114 is mounted such that a base plate 115 for the part 114 is fastened to an outer surface side of the inner panel 106 (the side of a luggage compartment 122) with fastening means, such as bolts. It is noted that Fig. 8 illustrates an interior part 118 that is mounted on the outer surface side of the inner panel 106 (the luggage compartment 122 side) and covers the inner panel 106, and an interior part 120 when the part 114 is not mounted. In the part mounting example described above, the part 114 protrudes to the front side of the vehicle (to the right in Fig. 8) from the inner panel 106, resulting in a reduced space of the luggage compartment 122 in the vehicle longitudinal direction (in a crosswise direction in Fig. 8). Furthermore, the inner panel 106 may be deformed, cracked, or otherwise damaged depending on the weight of the part 114 (including the base plate 115).

In the present technical field, a need exists for a reinforcing structure of a vehicle door and it is an object of the present invention to further develop a reinforcing structure of a vehicle door according to the preamble of claim 1 such that it houses a part in the vehicle door and prevents a luggage compartment space from being decreased and an inner panel from being damaged by the weight of the part.

### Solution to Problem

The object of the present invention is solved by a reinforcing structure of a vehicle door according to claim 1. Further advantageous developments are subject-matter of dependent claims.

The reinforcing structure of a vehicle door has an arrangement in which the recess formed from the outer surface side to the side of the internal space is formed in the inner panel of the vehicle door. This arrangement enables a part to be housed in the part housing recess. In addition, the reinforcing structure of a vehicle door houses the part in the part housing recess, which can prevent a luggage compartment space from being decreased as a result of the mounting of the part. Additionally, the reinforcing structure of a vehicle door includes the reinforcing member that joins the part housing recess in the inner panel to the outer panel. This arrangement can enhance a reinforcing effect of the vehicle door and the rigidity of the vehicle door. Additionally, the reinforcing structure of a vehicle door can shorten the arm length of the reinforcing member that extends across the inner panel and the outer panel to a short dimension that corresponds to a distance between the part housing recess and the outer panel. This configuration enables the reinforcing structure of a vehicle door to enhance the reinforcing effect by the reinforcing member and to prevent the inner panel from being damaged by weight of the part.

In one embodiment, the reinforcing member may be a cut-and-raised portion formed in the part housing recess by cutting and raising. This configuration forms the reinforcing member (the cut-and-raised portion) using the inner panel in the reinforcing structure of a vehicle door, which does not increase the number of parts.

In one embodiment, a bead may be formed in the outer panel at a position to which the reinforcing member is joined. This configuration allows the reinforcing structure of a vehicle door to further enhance a reinforcing effect produced by the connection by the reinforcing member between the inner panel and the outer panel.

In one embodiment, the bead may overlap with an exterior part mounted on an outer surface side of the outer panel in the vehicle longitudinal direction. This configuration allows the reinforcing structure of a vehicle door to conceal a portion of the bead overlapping with the exterior part in the vehicle longitudinal direction, so that diminished appearance caused by the bead can be prevented.

### Advantageous Effects of Invention

The reinforcing structure of a vehicle door according to the present invention enables a part to be housed in the vehicle door and prevents the luggage compartment space from being decreased and the inner panel from being damaged by weight of the part.

### Brief Description of Drawings

[Fig. 1] Fig. 1 is a rear elevation illustrating a back door according to an embodiment of the present invention.
[Fig. 2] Fig. 2 is a cross-sectional view taken along line II-II of Fig. 1.
[Fig. 3] Fig. 3 is an external view illustrating parts in areas of an inner panel around a part housing recess.
[Fig. 4] Fig. 4 is an external view illustrating parts in areas of an outer panel around a bead.
[Fig. 5] Fig. 5 is a cross-sectional view illustrating a back door main unit according to a modification.
[Fig. 6] Fig. 6 is a rear elevation illustrating a back door according to a known vehicle door.
[Fig. 7] Fig. 7 is a cross-sectional view taken along line VII-VII of Fig. 6.
[Fig. 8] Fig. 8 is a cross-sectional view illustrating a part mounting example.

### Description of Embodiments

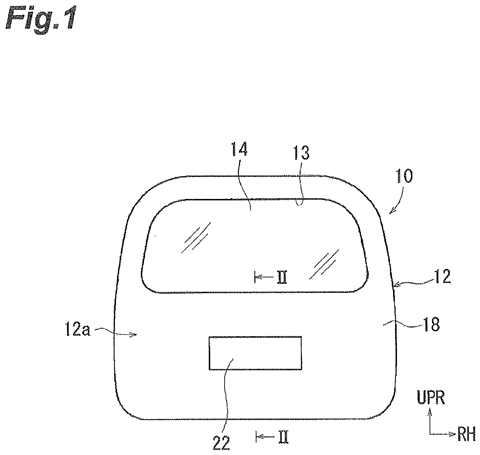

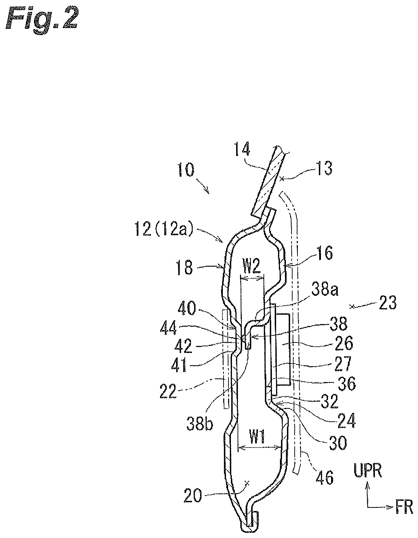

One embodiment for carrying out the present invention will be described below with reference to the accompanying drawings. In the embodiment, a back door that opens and closes a door opening portion provided in a rear end portion of a vehicle body in a vehicle such as an automobile including, for example, a hatchback vehicle or a station wagon, will be exemplarily described. Fig. 1 is a rear elevation illustrating the back door. Fig. 2 is a cross-sectional view taken along line II-II of Fig. 1. In the drawings, an arrow UPR denotes the vehicle upward direction, an arrow RH denotes the vehicle rightward direction, and an arrow FR denotes the vehicle forward direction.

As illustrated in Fig. 1, a back door 10 includes a back door main unit 12 that serves as a main unit of the back door 10 and a window glass 14 provided in an upper portion of the back door main unit 12. The back door 10 opens and closes a door opening portion (not illustrated) provided in a rear end portion of a vehicle body in a vehicle such as a hatchback vehicle or a station wagon. The window glass 14 is mounted in a window opening portion 13 formed in the upper portion of the back door main unit 12.

As illustrated in Fig. 2, the back door main unit 12 includes an inner panel 16 formed of sheet metal and an outer panel 18 formed of sheet metal. The inner panel 16 and the outer panel 18 are joined to each other so as to form an internal space 20 therebetween. Specifically, a peripheral edge portion of the inner panel 16 and a peripheral edge portion of the outer panel 18 are joined to each other by, for example, welding. The inner panel 16 and the outer panel 18 are further joined to each other by, for example, welding at edge portions of the window opening portion 13. A lower half portion excluding an upper half portion of the back door main unit 12 on the side of the window opening portion 13 will be referred to as a door main unit 12a. On the door main unit 12a, a license plate 22 is mounted as an exterior part at a central portion on an outer surface side (a rear surface side of the vehicle) of a vertical wall-shaped portion of the outer panel 18 (see Fig. 1).

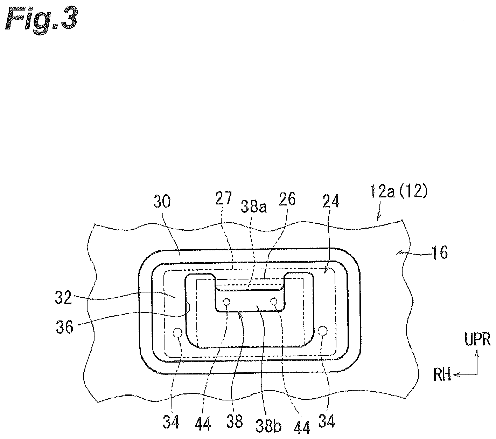

As illustrated in Fig. 2, in the door main unit 12a, a part housing recess 24 is formed at a central portion of a vertical wall-shaped portion of the inner panel 16. The part housing recess 24 is shaped into a laterally long rectangular dish that is recessed from an outer surface side (the side of a luggage compartment 23 of the vehicle), specifically, from the front side toward the internal space 20 (the rear side). The part housing recess 24 is disposed anterior to the license plate 22. Additionally, the part housing recess 24 can house therein a part 26 having a laterally long rectangular shape that is thin in the longitudinal direction (the crosswise direction in Fig. 2). The part 26 is, for example, an automatic door opening/closing control unit (ECU) requiring heat dissipation. A base plate 27 is mounted on the rear side surface (the left side surface in Fig. 2) of the part 26. The base plate 27 has an outline greater than that of the part 26. Fig. 3 is an external view illustrating parts in areas of the inner panel around the part housing recess. Fig. 3 corresponds to a front elevation as viewed from the side of the luggage compartment 23.

As illustrated in Figs. 2 and 3, the part housing recess 24 includes an annular peripheral wall portion 30 and a seating surface portion 32. The peripheral wall portion 30 has a vertical width extending in the vertical direction and a lateral width extending in the lateral direction. Both of the vertical width and the lateral width gradually narrow from the central portion of the inner panel 16 toward the internal space 20. The seating surface portion 32 corresponds to a vertical wall-shaped bottom wall portion. The base plate 27 of the part 26 is mounted in a surface contact condition on the seating surface portion 32 with fastening means, such as bolts (fastening portions 34 in Fig. 3). The fastening portions 34 are set, for example, at two places on the seating surface portion 32.

The seating surface portion 32 has a cut-and-raise opening slit 36 formed at a central portion thereof. The cut-and-raise opening slit 36 is substantially U-shaped. A tongue-shaped portion surrounded by the opening slit 36 forms a cut-and-raised portion 38 that protrudes from above downward. The cut-and-raised portion 38 includes an arm portion 38a and a leading end portion 38b. The arm portion 38a is bent substantially at right angles from the seating surface portion 32 toward the rear of the vehicle (leftward in Fig. 2) and extends toward the outer panel 18 (to the left side in Fig. 2). The leading end portion 38b is bent substantially at right angles from a trailing end portion of the arm portion 38a (the left end portion in Fig. 2) downward. In addition, the cut-and-raised portion 38 has a proximal end portion (an end portion on the side adjacent to the seating surface portion 32) set on a side having a greater strength in the seating surface portion 32 of the part housing recess 24. In the present embodiment, the seating surface portion 32 of the part housing recess 24 has strength greater on the side adjacent to the window opening portion 13 than on other portions. Thus, the cut-and-raised portion 38 has the proximal end portion set on the side adjacent to the window opening portion 13. The part housing recess 24, the cut-and-raise opening slit 36, and the cut-and-raised portion 38 are formed by press forming. It is noted that the cut-and-raised portion 38 corresponds to a "reinforcing member" in this description.

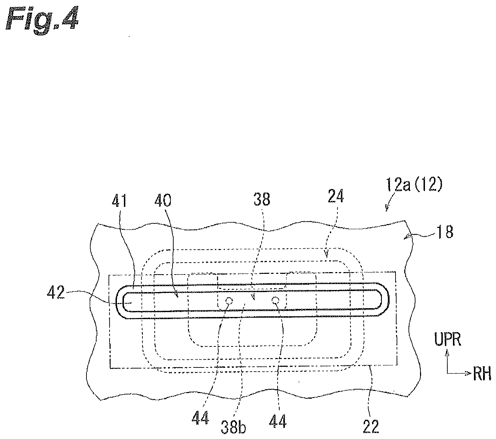

As illustrated in Fig. 2, a bead 40 is formed at the vertical wall-shaped portion of the outer panel 18 facing the part housing recess 24. The bead 40 is shaped into a laterally long narrow dish recessed from the outer surface side (the rear surface side of the vehicle) toward the internal space 20 (the front side). Fig. 4 is an external view illustrating parts in areas of the outer panel around the bead. Fig. 4 corresponds to a front elevation as viewed from the rear side of the vehicle. As illustrated in Figs. 2 and 4, the bead 40 thoroughly overlaps with the license plate 22 mounted on the outer surface side of the outer panel 18 (the rear surface side of the vehicle) in the vehicle longitudinal direction. In addition, the bead 40 includes an annular peripheral wall portion 41 and a vertical wall-shaped bottom wall portion 42. The peripheral wall portion 41 has a vertical width extending in the vertical direction and a lateral width extending in the lateral direction. Both of the vertical width and the lateral width gradually narrow from the vertical wall portion of the outer panel 18 toward the internal space 20. The bottom wall portion 42 extends in parallel, or nearly in parallel, with the leading end portion 38b of the cut-and-raised portion 38 of the inner panel 16. The bead 40 is formed by press forming.

The leading end portion 38b of the cut-and-raised portion 38 of the inner panel 16 and the bottom wall portion 42 of the bead 40 of the outer panel 18 are joined to each other by mastic bonding (bonded portions 44 in Figs. 2 and 4). The bonded portions 44 are set, for example, at two places at right and left. The mastic bonding may be replaced by welding, such as spot welding. It is noted that Fig. 2 illustrates an interior part 46 that is mounted on the outer surface side (the luggage compartment 23 side) of the inner panel 16 and covers the inner panel 16.

In Fig. 2, a distance in the vehicle longitudinal direction between the vertical wall-shaped portion around the part housing recess 24 in the inner panel 16 and the vertical wall-shaped portion around the bead 40 of the outer panel 18 is denoted as W1. A distance in the vehicle longitudinal direction between the seating surface portion 32 of the part housing recess 24 in the inner panel 16 and the bottom wall portion 42 of the bead 40 of the outer panel 18 is denoted as W2. The distance W2 represents the distance W1 from which respective depths of the part housing recess 24 and the bead 40 (longitudinal dimensions) are subtracted.

In a reinforcing structure of the back door 10 according to the present embodiment, the inner panel 16 of the back door 10 has the part housing recess 24 that is formed from the outer surface side toward the internal space 20. This arrangement allows the part housing recess 24 to house therein the part 26 (including the base plate 27) (see Fig. 2). In addition, in the reinforcing structure of the back door 10, the arrangement in which the part 26 is housed in the part housing recess 24 allows a space in the luggage compartment 23 in the vehicle longitudinal direction (in the crosswise direction in Fig. 2) as a result of the part 26 (including the base plate 27) being mounted to be prevented from being reduced.

The reinforcing structure includes the cut-and-raised portion 38 as a reinforcing member that joins the part housing recess 24 in the inner panel 16 to the outer panel 18 (see Fig. 2). This arrangement can enhance a reinforcing effect of the back door 10 and the rigidity of the back door 10.

The distance W2 in the vehicle longitudinal direction between the seating surface portion 32 of the part housing recess 24 in the inner panel 16 and the bottom wall portion 42 of the bead 40 of the outer panel 18 can be shorter than the distance W1 in the vehicle longitudinal direction between the vertical wall-shaped portion around the part housing recess 24 in the inner panel 16 and the vertical wall-shaped portion around the bead 40 of the outer panel 18 (see Fig. 2). This arrangement allows the arm length (a length of the arm portion 38a) of the cut-and-raised portion 38 extending across the inner panel 16 and the outer panel 18 to be shortened to a short dimension that corresponds to the distance W2. As a result, a reinforcing effect by the cut-and-raised portion 38 can be enhanced, so that the inner panel 16 can be prevented from being damaged by weight of the part 26 (including the base plate 27).

The cut-and-raised portion 38 formed in the part housing recess 24 by cutting and raising functions as the reinforcing member. Thus, the arrangement in which the reinforcing member (the cut-and-raised portion 38) is formed with the inner panel 16 does not increase the number of parts. Specifically, the back door 10 can be reinforced with the inner panel 16 to thereby enhance the rigidity of the back door 10 without the need to use a reinforcing member as a separate member.

Additionally, the bead 40 that joins the leading end portion 38b of the cut-and-raised portion 38 as the reinforcing member is formed in the outer panel 18. This arrangement further improves a reinforcing effect produced by the connection by the cut-and-raised portion 38 between the inner panel 16 and the outer panel 18.

The bead 40 thoroughly overlaps with the license plate 22 mounted on the outer surface side of the outer panel 18 (the rear surface side of the vehicle) in the vehicle longitudinal direction (see Figs. 2 and 4). Thus, the bead 40 that overlaps with the license plate 22 in the vehicle longitudinal direction is generally concealed, so that diminished appearance caused by the bead 40 can be prevented. It is noted that the bead 40 and the license plate 22 are required to overlap with each other at least partially.

Additionally, the bead 40 is formed in the outer panel 18 so as to be recessed from the outer surface side toward the internal space 20. This arrangement further shortens the arm length (the length of the arm portion 38a) of the cut-and-raised portion 38 to thereby enhance the reinforcing effect by the cut-and-raised portion 38 compared with a case (described later) in which the leading end portion 38b of the cut-and-raised portion 38 of the inner panel 16 is joined to the vertical wall-shaped portion of the outer panel 18 on which the bead 40 is not formed. Specifically, the arm length of the cut-and-raised portion 38 can be shortened to a short dimension that corresponds to the distance W2 between the seating surface portion 32 of the part housing recess 24 and the bottom wall portion 42 of the bead 40 of the outer panel 18.

The part 26 housed in the part housing recess 24 is a part that requires heat dissipation (the automatic door opening/closing control unit (ECU)). The heat generated by the part 26 housed in the part housing recess 24 can dissipate to the internal space 20 of the back door 10 through an opening in the cut-and-raise opening slit 36 provided by raising the cut-and-raised portion 38 in the part housing recess 24. Heat in the internal space 20 dissipates from the outer panel 18 as the vehicle runs.

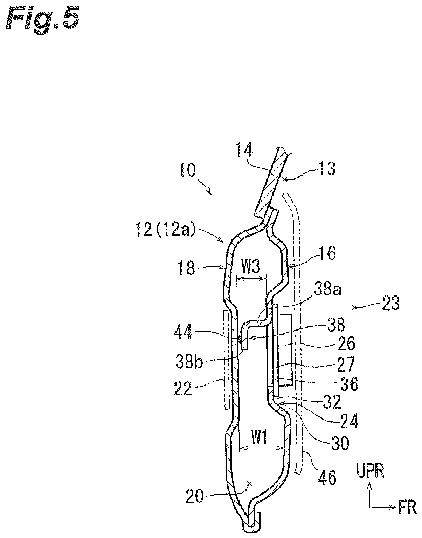

The following describes a modification in which the leading end portion 38b of the cut-and-raised portion 38 of the inner panel 16 is joined to the vertical wall-shaped portion of the outer panel 18 on which the bead 40 is not formed. Fig. 5 is a cross-sectional view illustrating a back door main unit.

As illustrated in Fig. 5, the modification omits the bead 40 of the outer panel 18 (see Fig. 2) to thereby form the vertical wall-shaped portion that faces the seating surface portion 32 of the part housing recess 24 into a flat plate. The leading end portion 38b of the cut-and-raised portion 38 of the inner panel 16 is joined, in the outer panel 18, to the vertical wall-shaped portion that faces the seating surface portion 32 of the part housing recess 24.

In Fig. 5, a distance in the vehicle longitudinal direction between the seating surface portion 32 of the part housing recess 24 in the inner panel 16 and the vertical wall-shaped portion corresponding to the part housing recess 24 in the outer panel 18 is denoted as W3. The distance W3 represents the distance W1 from which the depth (the dimension in the longitudinal direction) of the part housing recess 24 is subtracted. In this case, the distance W3 can be shorter than the distance W1 in the vehicle longitudinal direction between the vertical wall-shaped portion around the part housing recess 24 in the inner panel 16 and the vertical wall-shaped portion around the bead 40 of the outer panel 18. This arrangement allows the arm length (a length of the arm portion 38a) of the cut-and-raised portion 38 extending across the inner panel 16 and the outer panel 18 to be shortened to a short dimension that corresponds to the distance W3. As a result, a reinforcing effect by the cut-and-raised portion 38 can be enhanced, so that the inner panel 16 can be prevented from being damaged by weight of the part 26 (including the base plate 27).

It will be understood that the present invention is not limited to the embodiment described above and changes may be made therein without departing from the spirit and scope of the invention. For example, the present invention is applicable to any type of door other than the back door.

The cut-and-raised portion 38 of the inner panel 16 may be replaced with a reinforcing member formed separately from the inner panel 16. In this case, the reinforcing member is required only to have a proximal end portion (an end portion) attached to the seating surface portion 32 of the part housing recess 24 and have a distal end portion (another end portion) joined to the outer panel 18. The shape or other characteristics of the reinforcing member (including the cut-and-raised portion 38) may be changed as appropriate.

The part 26, instead of one requiring heat dissipation, may be one not requiring heat dissipation. Possible examples of the part 26 include, in addition to the automatic door opening/closing control unit (ECU), a vibration damping mass damper, a rear wiper motor, a luggage lamp, or a switch. The part housing recess 24 may be changed as appropriate in terms of, for example, its shape, depth, displacement position, and the number thereof, depending on the part 26 (including the base plate 27) to be housed therein. Also in this case, preferably, the reinforcing member (the cut-and-raised portion 38) has the proximal end portion set on the side having a greater strength in the seating surface portion 32 of the part housing recess 24. Accordingly, the direction in which the cut-and-raised portion 38 protrudes may be changed to any direction, for example, from below upward, from the left to the right, from the right to the left, or from obliquely above obliquely downward. The part 26 may be omitted depending on the vehicle model.

The bead 40 of the outer panel 18 may be formed to be recessed from the outer surface side (the rear surface side of the vehicle) to a side opposite to the internal space 20. The bead 40 of the outer panel 18 may be changed as appropriate in terms of, for example, its shape, depth, displacement position, and the number thereof. The exterior part is not limited to the license plate 22, but may be an ornamental molding or garnish.

### Reference Signs List

10... back door (vehicle door), 16... inner panel, 18... outer panel, 20... internal space, 22... license plate, 24... part housing recess, 26... part, 38... cut-and-raised portion (reinforcing member), 38a... arm portion, 38b... leading end portion, 40... bead

## Claims

1. A reinforcing structure of a vehicle door (10) that includes an inner panel (16) and an outer panel (18), the inner panel (16) and the outer panel (18) being joined to each other to form an internal space (20) therebetween, the reinforcing structure of a vehicle door comprising a reinforcing member (38), wherein
the inner panel (16) includes a recess (24) formed from an outer surface side toward the internal space (20), and
the reinforcing member (38) is formed integrally with the inner panel (16),
**characterized in that**
the inner panel (16) includes a part (26) and the recess (24) is formed as a part housing recess (24) for housing the part (26) that is housed,
the part housing recess (24) has a vertical wall-shaped seated surface potion (32) and is able to house the part (26) on the luggage compartment (23) side of the seated surface portion, and
the reinforcing member (38) is configured to join the part housing recess (24) to the outer panel (18).

2. The reinforcing structure of a vehicle door (10) according to claim 1, wherein
the reinforcing member (38) is a cut-and-raised portion (38) formed in the part housing recess (24) by cutting and raising.

3. The reinforcing structure of a vehicle door (10) according to claim 1 or 2, wherein
a bead (40) is formed in the outer panel (18) at a position to which the reinforcing member (38) is joined.

4. The reinforcing structure of a vehicle door (10) according to claim 3, wherein
the bead (40) overlaps with an exterior part (22) mounted on an outer surface side of the outer panel (18) in a vehicle longitudinal direction.

## Patentansprüche

1. Verstärkungsstruktur einer Fahrzeugtür (10), die ein Innenpaneel (16) und ein Außenpaneel (18) enthält, wobei das Innenpaneel (16) und das Außenpaneel (18) miteinander verbunden sind, um einen Innenraum (20) zwischen diesen auszubilden, wobei die Verstärkungsstruktur einer Fahrzeugtür ein Verstärkungsbauteil (38) aufweist, wobei
das Innenpaneel (16) eine Vertiefung (24) enthält, die von einer Außenflächenseite in Richtung des Innenraums (20) ausgebildet ist, und
das Verstärkungsbauteil (38) mit dem Innenpaneel (16) einstückig ausgebildet ist,
**dadurch gekennzeichnet, dass**
das Innenpaneel (16) eine Komponente (26) enthält und die Vertiefung (24) als eine Komponentenaufnahmevertiefung (24) zum Aufnehmen der aufgenommenen Komponente (26) ausgebildet ist,
die Komponentenaufnahmevertiefung (24) einen vertikalen wandförmigen Auflageflächenabschnitt (32) hat und imstande ist, die Komponente (26) an der Seite (23) des Gepäckraums des Auflageflächenabschnitts aufzunehmen, und
das Verstärkungsbauteil (38) gestaltet ist, um die Komponentenaufnahmevertiefung (24) mit dem Außenpaneel (18) zu verbinden.

2. Verstärkungsstruktur einer Fahrzeugtür (10) gemäß Anspruch 1, wobei
das Verstärkungsbauteil (38) ein aufgetrennter und angehobener Abschnitt (38) ist, der in der Komponentenaufnahmevertiefung (24) durch Schneiden und Anheben ausgebildet ist.

3. Verstärkungsstruktur einer Fahrzeugtür (10) gemäß Anspruch 1 oder 2, wobei
eine Sicke (40) in dem Außenpaneel (18) an einer Stelle ausgebildet ist, die mit dem Verstärkungsbauteil (38) verbunden ist.

4. Verstärkungsstruktur einer Fahrzeugtür (10) gemäß Anspruch 3, wobei
die Sicke (40) mit einer Außenkomponente (22) überlappt, die an einer Außenflächenseite des Außenpaneels (18) in einer Fahrzeuglängsrichtung montiert ist.

## Revendications

1. Structure de renforcement d'une porte de véhicule (10) qui comprend un panneau interne (16) et un panneau externe (18), le panneau interne (16) et le panneau externe (18) étant assemblés l'un à l'autre afin de former un espace interne (20) entre eux, la structure de renforcement d'une porte de véhicule comprenant un élément de renforcement (38), dans laquelle
le panneau interne (16) comprend un évidement (24) formé à partir d'un côté de surface externe vers l'espace interne (20), et
l'élément de renforcement (38) est formé de manière solidaire avec le panneau interne (16),
**caractérisée en ce que**
le panneau interne (16) comprend une pièce (26) et l'évidement (24) est formé comme un évidement de logement de pièce (24) pour loger la pièce (26) qui est logée,
l'évidement de logement de pièce (24) a une partie de surface installée en forme de paroi verticale (32) et peut loger la pièce (26) du côté du compartiment de bagages (23) de la partie de surface installée, et
l'élément de renforcement (38) est configuré pour assembler l'évidement de logement de pièce (24) au panneau externe (18).

2. Structure de renforcement d'une porte de véhicule (10) selon la revendication 1, dans laquelle
l'élément de renforcement (38) est une partie découpée et relevée (38) formée dans l'évidement de logement de pièce (24) par découpe et relevage.

3. Structure de renforcement d'une porte de véhicule (10) selon la revendication 1 ou 2, dans laquelle
un bourrelet (40) est formé dans le panneau externe (18) dans une position dans laquelle l'élément de renforcement (38) est assemblé.

4. Structure de renforcement d'une porte de véhicule (10) selon la revendication 3, dans laquelle
le bourrelet (40) recouvre une pièce extérieure (22) montée sur un côté de surface externe du panneau externe (18) dans une direction longitudinale de véhicule.
